# EUROPÄISCHE PATENTSCHRIFT

(11) **EP 3 441 659 B1**
(45) Veröffentlichungstag und Bekanntmachung des Hinweises auf die Patenterteilung: **06.12.2023**
(21) Anmeldenummer: 18185147.8
(22) Anmeldetag: 24.07.2018
(51) Int. Cl.: F16L 41/00, G01L 19/00

(54) **FLUIDLEITUNGSELEMENT FÜR EINE FLUIDLEITUNG**
CONNECTION FITTING FOR A FLUID CONDUIT
ÉLÉMENT DE CONDUITE DE FLUIDE POUR UNE CONDUITE DE FLUIDE

(30) Priorität: 10.08.2017 DE 102017118269
(43) Veröffentlichungstag der Anmeldung: 13.02.2019
(73) Patentinhaber: Voss Automotive GmbH, 51688 Wipperfürth (DE)
(72) Erfinder: ROSENFELDT, Sascha, 51688 Wipperfürth (DE); ZWILLUS, Christian, 51702 Bergneustadt (DE); MITTERER, Reiner, 51688 Wipperfürth (DE)
(74) Vertreter: Dr. Solf & Zapf Patent- und Rechtsanwalts PartG mbB

(56) Entgegenhaltungen:
- EP-A2- 1 600 742
- WO-A1-02/075193
- WO-A1-2009/010742
- DE-A1-102010 039 970
- GB-A- 2 207 723
- US-A1- 2007 212 912

## Beschreibung

Die Erfindung betrifft ein Fluidleitungselement für eine Fluidleitung gemäß dem Oberbegriff des Patentanspruchs 1. Das Fluidleitungselement weist mindestens eine Anschlussvorrichtung für ein Anbauteil, mindestens einen Fluidkanal und mindestens einen Anbauteilkanal auf, wobei der Anbauteilkanal von dem Fluidkanal abzweigt.

Fluidleitungselemente sind im Stand der Technik in einer Vielzahl von Ausgestaltungen bekannt. In fluidleitenden Systemen in Fahrzeugen werden immer häufiger wässrige Fluide oder Wasser in fluidleitenden Systemen geführt. Die Betriebsparameter des Fluids werden dabei mittels Sensoren überwacht bzw. überprüft. Die dazu verwendeten Sensoren, z. B. Drucksensoren, beinhalten häufig empfindliche Bauteile, beispielsweise Membrane, die anfällig für Beschädigungen sind, insbesondere für Beschädigungen durch Einwirkung von Eisbildung.

Dabei ist es aus dem Stand der Technik bekannt, Fluidleitungen und Anbauteile, z. B. Sensoren, frostsicher auszulegen oder zu beheizen, wodurch allerdings die Kosten deutlich steigen.

US 2007/0212912 A1 offenbart einen Schnellverbinder zur Anordnung, beispielsweise eines Sensors, an einem Gehäuse. Das Gehäuse weist eine Fluidleitung auf. Von dem Fluidkanal zweigt ein weiterer Kanal ab, der einen kleineren Durchmesser als der Fluidkanal aufweist.

EP 1 600 742 A2 offenbart eine Sensoranordnung mit thermischer Entkopplung des Sensors vom gemessenen Medium. An einer Medienanbindungsstelle einer Rohrleitung ist eine Aufnahme für einen Sensor vorgesehen. Der Sensor ist fluidtechnisch mit der Rohrleitung verbunden.

DE 10 2010 039 970 A1 offenbart einen Kombisensor für einen Verbrennungsmotor. Der Kombisensor ist an einem Ansaugrohr angeordnet und ragt zumindest in den Querschnitt des Ansaugrohrs hinein. Ein zweiter Sensor ist entfernt von dem Ansaugrohr angeordnet.

WO 02/075193 A1 offenbart ein Verbindungselement für eine Fluidleitung. Das Verbindungselement weist Außenkanäle auf, die auf unterschiedliche Weise mit einem Sensor in Verbindung stehen. Als Anbauteil kann der Träger mit dem Sensor gesehen werden.

GB 2 207 723 A offenbart einen Verbindungsadapter, um einen Drucksensor in der Öffnung eines Tanks anzuordnen. Der Verbindungsadapter weist eine zentrale Öffnung und zwei zunächst schräg verlaufende, versetzt zur zentralen Öffnung angeordnete Nebenöffnungen auf.

WO 2009/010742 A1 offenbart einen Rohrverbinder mit integriertem Filter und integrierter Durchflussmessung. Ein Zuflusskanal ist seitlich zum Hauptkanal angeordnet, so dass das Filterelement entnommen werden kann.

Der vorliegenden Erfindung liegt ausgehend von dem vorgenannten Stand der Technik die Aufgabe zu Grunde, ein Fluidleitungselement für eine Fluidleitung anzugeben, bei dem eine Beschädigung von Anbauteilen durch Eisbildung zuverlässig verhindert wird.

Die vorgenannte Aufgabe ist bei einem gattungsgemäßen Fluidleitungselement mit den Merkmalen des kennzeichnenden Teils des Patentanspruchs 1 gelöst, nämlich dadurch dass der Anbauteilkanal entlang seiner Erstreckung mindestens eine Umlenkung aufweist und dass der Anbauteilkanal zumindest teilweise im Fluidleitungselement und zumindest teilweise im Anbauteil verläuft. Das Fluidleitungselement ist vorteilhaft zur Verwendung in einem Kraftfahrzeug vorgesehen. Der Anbauteilkanal stellt die fluidtechnische Verbindung zwischen dem Fluidkanal und dem Anbauteil, insbesondere mit Mess- bzw. Sensortechnik des Anbauteils her. Vorzugsweise stellt der Anbauteilkanal eine fluidtechnische Verbindung zwischen dem Fluidkanal und einer Sensoreinheit eines Drucksensors, insbesondere einer Siliziummembran, her. Der Anbauteilkanal ist insbesondere so ausgebildet, dass seine Abzweigung am Fluidkanal und sein Verlauf innerhalb des Anbauteils, insbesondere innerhalb eines Sensors, nicht koaxial sind. Der Anbauteilkanal weist mindestens einen ersten Abschnitt auf, der nicht parallel zu einem zweiten Abschnitt des Anbauteilkanals innerhalb des Anbauteils, beispielsweise einer Sensoreinheit, orientiert ist. Der Anbauteilkanal weist vorzugsweise mindestens zwei unterschiedliche Erstreckungsrichtungen auf. Vorzugsweise weist der Anbauteilkanal mindestens in einem Abschnitt einen bogen- und/oder kurvenförmigen Verlauf auf.

Die Umlenkung ist vorzugsweise in Verlauf des Anbauteilkanals zwischen dem Fluidkanal und der Anschlussvorrichtung angeordnet. Unter "Umlenkung" ist eine Änderung der Geometrie des Anbauteilkanals zu verstehen, die bei einem strömenden Fluid eine Richtungsänderung des Fluids hervorrufen würde. Die Umlenkung ist beispielsweise durch eine Änderung der Richtung des Anbauteils bei gleichbleibendem Querschnitt, beispielsweise einem Bogen, und/oder durch eine Querschnittsänderung des Anbauteilkanals realisiert. Vorzugsweise bezieht sich die durch die Umlenkung hervorgerufene Richtungsänderung des Anbauteilkanals auf eine Mittelachse des Anbauteilkanals. Beispielsweise ist die Umlenkung als Querschnittsveränderung ausgebildet, von der die Zu- und Ableitung des Anbauteilkanals nicht koaxial abzweigen, insbesondere in unterschiedlichen Richtungen abzweigen.

Durch die Umlenkung wird gewährleistet, dass im Falle von Eisbildung, insbesondere durch Frost, eine sich innerhalb des Anbauteilkanals ausbildende Eissäule nicht oder nur unwesentlich innerhalb des Anbauteilkanals, insbesondere durch die Kraftwirkung einer sich später im Fluidkanal ausbildenden Eissäule, in Richtung des Anbauteils, insbesondere der Sensoreinheit eines Sensors, verschiebbar ist. Dadurch wird eine Beschädigung des Anbauteils durch mechanische Einwirkung einer sich im Anbauteil ausbildenden Eissäule verhindert.

Die Geometrie des Anbauteilkanals ist folglich so gewählt, dass sich eine darin bildende Eissäule, insbesondere durch die Umlenkung, nicht verschiebt.

Insbesondere um im Fall von Frost ein zeitlich aufeinanderfolgendes Ausbilden von Eissäulen in dem Anbauteilkanal und anschließend in dem Fluidkanal zuverlässig zu gewährleisten, ist vorgesehen, dass der Querschnitt des Anbauteilkanals geringer als der Querschnitt des Fluidkanals ist. Insbesondere beträgt der Querschnitt des Anbauteilkanals lediglich 20%, bevorzugt 10%, besonders bevorzugt 5% des Querschnitts des Fluidkanals. Die vorgenannten prozentualen Angaben beziehen sich jeweils auf die Fläche des Querschnitts, insbesondere auf den kleinsten Querschnitt des Anbauteilkanals. Es ist vorgesehen, dass der Querschnitt des Anbauteilkanals entlang seiner Erstreckung konstant oder variierend ausgebildet ist. Im Falle eines variierenden Querschnitts ist der Querschnitt bevorzugt jedoch stets kleiner als der Querschnitt des Fluidkanals. Vorteilhaft weist der Anbauteilkanal mindestens einen Abschnitt auf, dessen Querschnitt geringer als der Querschnitt des Fluidkanals ist. Beispielsweise ist der Querschnitt des Anbauteilkanals zumindest im Bereich der Umlenkung geringer als der Querschnitt des Fluidkanals. Durch eine derartige Ausgestaltung kann sichergestellt werden, dass aufgrund des geringeren Volumens der Anbauteilkanal zeitlich vor dem Fluidkanal zufriert und sich eine innerhalb des Anbauteilkanals unverschiebliche Eissäule ausbildet. Wenn folglich anschließend der Fluidkanal zufriert, wird eine Verschiebung der Eissäule, insbesondere ausgehend von einer durch eine Eissäule innerhalb des Fluidkanals ausgehenden Krafteinwirkung, innerhalb des Anbauteilkanals verhindert und damit eine Beschädigung des Anbauteils, insbesondere eines Sensors, ausgeschlossen. Insbesondere um die Vielfalt der herstellbaren Umlenkungsgeometrien zu vergrößern, ist ferner vorgesehen, dass der Anbauteilkanal zumindest teilweise im Fluidleitungselement und zumindest teilweise im Anbauteil verläuft. Die Umlenkung kann beispielsweise dadurch realisiert sein, dass ein Teil der den Anbauteilkanal bildenden Geometrie im Fluidleitungselement und ein Teil der Geometrie im Anbauteil ausgebildet ist, wodurch eine einfache Entformbarkeit der Bauteile bei der Herstellung gewährleistet wird. Der Anbauteilkanal erstreckt sich folglich vom Fluidkanal bis zu einer eigentlichen Sensoreinheit eines Anbauteils.

Zudem ist vorgesehen, dass die Anschlussvorrichtung als Aufnahme für einen Sensor ausgebildet ist, insbesondere für einen Drucksensor. Die Anschlussvorrichtung und das Anbauteil weisen vorzugsweise jeweils einen Haltekragen auf, die mittels eines Montagerings derart zusammenhaltbar sind, dass das Anbauteil, insbesondere ein Sensor, verliersicher in der Anschlussvorrichtung gehalten ist. Vorzugsweise weist die Anschlussvorrichtung Dichtflächen für eine das Anbauteil umgebende Dichtung, insbesondere eine O-Ring-Dichtung, auf. Gemäß einer Ausgestaltung des Fluidleitungselements hat sich als vorteilhaft herausgestellt, wenn vorgesehen ist, dass die Umlenkung eine Richtungsänderung des Anbauteilkanals von mindestens 75°, insbesondere mindestens 90°, bevorzugt von 180° beinhaltet. Die Richtungsänderung bezieht sich auf eine Ursprungsrichtung, ausgehend von dem Abzweig des Anbauteilkanals von der Fluidleitung. Die Winkelangabe bezieht sich beispielsweise auf jede gedachte Ebene, die die ursprüngliche Richtung beinhaltet. Dabei muss der nachfolgende Verlauf nicht zwingend an der gedachten Ebene orientiert sein. Mit einer Umlenkung mit einem der vorgenannten Winkel kann vorteilhaft eine Verschiebung einer sich im Anbauteilkanal ausbildenden Eissäule verhindert werden.

Gemäß einer weiteren Ausgestaltung ist bevorzugt vorgesehen, dass der Anbauteilkanal ausgehend von der Fluidleitung, insbesondere von seinem Abzweig ausgehend von der Fluidleitung, unmittelbar einen bogenförmigen Verlauf, insbesondere mit einer Richtungsänderung von 180°, bevorzugt mit einem konstanten Krümmungsradius, aufweist. Vorteilhaft ist zudem vorgesehen, dass der Anbauteilkanal zumindest teilweise von einem abnehmbaren Deckel am Fluidleitungselement verschlossen wird. Durch den bogenförmigen Verlauf wird sichergestellt, dass sich die Eissäule nicht verschieben lässt. Zudem kann mit dem bogenförmigen Verlauf eine längere, den Fluidkanal umgebende, Wegstrecke des Anbauteilkanals realisiert werden, die eine Eisbildung innerhalb des Anbauteilkanals zeitlich vor dem Fluidkanal gewährleistet.

Die Herstellung eines derartigen bogenförmigen Verlaufes, insbesondere einer Richtungsänderung von 180°, wird vereinfacht, wenn der Anbauteilkanal zumindest abschnittsweise von einem abnehmbaren Deckel am Fluidleitungselement verschlossen ist. Dadurch ist eine Entformbarkeit des Fluidleitungselements bei der Herstellung gewährleistet, wobei der Deckel den Anbauteilkanal verschließt. Vorzugsweise ist vorgesehen, dass der Deckel federnd ausgebildet ist und/oder federnd am Fluidleitungselement gelagert ist, so dass bei sich ausbildender Eissäule eine Ausweichbewegung des Deckels ermöglicht ist, ohne dass dieser durch eine von der Eissäule ausgehende Kraftwirkung beschädigt oder entfernt wird.

Beispielsweise die Fertigung des Fluidleitungselements lässt sich dadurch vereinfachen, dass die Umlenkung im Fluidleitungselement und/oder im Anbauteil angeordnet ist. Die Anordnung der Umlenkung lediglich im Fluidleitungselement hat den Vorteil, dass standardisierte Anbauteile verwendet werden können, bei denen aber gleichzeitig eine Beschädigung durch Eisbildung zuverlässig verhindert wird. Es ist aber auch vorgesehen, dass ein Teil der Umlenkung des Anbauteilkanals im Fluidleitungselement und ein weiterer Teil der Umlenkung im Anbauteil angeordnet ist. Dazu muss allerdings das Anbauteil speziell ausgebildet sein. Vorteilhaft ist auch vorgesehen, dass zwischen Anschlussvorrichtung und Anbauteil ein Adapter angeordnet ist, der einen Teil des Anbauteilkanals beinhaltet, so dass standardisierte Anbauteile, insbesondere standardisierte Sensoren, verwendbar sind.

Für eine zeitlich aufeinanderfolgende Erstarrung der Eissäulen hat sich zudem als vorteilhaft herausgestellt, wenn der Querschnitt des Anbauteilkanals im Fluidleitungselement geringer ist als der Querschnitt des Anbauteilkanals im Anbauteil. Insbesondere bei standardisierten Anbauteilen weist der Abschnitt des Anbauteilkanals im Anbauteil, insbesondere im Sensor, einen standardisierten Querschnitt auf. Der Querschnitt des Anbauteilkanals im Fluidleitungselement wird dann geringer ausgebildet, um ein Entstehen einer Eissäule in dem Bereich mit dem geringsten Querschnitt zeitlich zuerst zu gewährleisten.

Gemäß einer weiteren Ausgestaltung des Fluidleitungselements ist vorteilhaft, wenn der Anbauteilkanal, insbesondere eine Mittelachse des Anbauteilkanals, in einer gedachten Ebene E1 verläuft, wobei die Ebene E1 eine Mittelachse des Fluidkanals beinhaltet. Der Anbauteilkanal verläuft dabei vorzugsweise zumindest teilweise parallel zum Fluidkanal. Die Umlenkung, insbesondere mit einem Winkel von vorzugsweise 90°, ist dabei ebenfalls in der Ebene E1 angeordnet. Alternativ dazu ist vorgesehen, dass der Anbauteilkanal in einer Ebene E2 verläuft, zu der die Mittelachse des Fluidkanals eine Normale ist. Der Anbauteilkanal erstreckt sich folglich zumindest teilweise in einer Richtung orthogonal zur Mittelachse des Fluidkanals.

Ein zeitlich aufeinanderfolgendes Erstarren einer Eissäule in dem Anbauteilkanal bzw. in dem Fluidkanal wird dadurch weiter gefördert, dass der Anbauteilkanal den Fluidkanal zumindest teilweise umgebend angeordnet ist, insbesondere in einem Bereich mit einem Mittelpunktswinkel um die Mittelachse des Fluidkanals von etwa 135°. Der Mittelpunktswinkel erstreckt sich dabei vorzugsweise in der zuvor beschriebenen Ebene E2. Der Anbauteilkanal erstreckt sich insbesondere zumindest in einem Abschnitt parallel zu einer Tangente an den Querschnitt des Fluidkanals. Wenn sich der Anbauteilkanal zumindest teilweise um den Fluidkanal herum erstreckt, wird eine frühzeitige Erstarrung des Fluids innerhalb des Anbauteilkanals gefördert.

Die Fertigung eines Fluidleitungselements lässt sich gemäß einer weiteren Ausgestaltung vorteilhaft dadurch vereinfachen, dass der Anbauteilkanal zumindest abschnittsweise einen halbkreisförmigen Querschnitt aufweist. Ein halbkreisförmiger Querschnitt lässt sich auf einfache Weise entformen. Beispielsweise ist auch vorgesehen, dass sich der Anbauteilkanal zumindest abschnittsweise aus einer ersten Halbschale am oder im Fluidleitungselement und einer weiteren Halbschale am oder im Anbauteil zusammensetzt.

Insbesondere bei Ausführungsbeispielen, bei denen die Umlenkung teilweise oder vollständig im Anbauteil, insbesondere im Sensor, angeordnet ist, hat sich gemäß einer Ausgestaltung als vorteilhaft herausgestellt, wenn vorgesehen ist, dass das Anbauteil mit einer Verdrehsicherung gegen ein Verdrehen gegenüber der Anschlussvorrichtung gesichert ist. Die Verdrehsicherung verhindert, dass sich der Anbauteilkanal unbeabsichtigt verschiebt.

Besonders vorteilhaft ist gemäß einer weiteren Ausgestaltung, wenn vorgesehen ist, dass das Fluidleitungselement als Verbinderstück, insbesondere Winkelstück oder T-Stück, zum Verbinden von Fluidleitungen ausgebildet ist. Hierbei stellt ein T-Stück einerseits zwei fluidführende Leitungen zum Verbinden und andererseits eine Anschlussvorrichtung für ein Anbauteil, insbesondere einen Drucksensor zur Verfügung. Gleiches gilt für ein als Winkelstück ausgebildetes Fluidleitungselement.

Gemäß der Erfindung sind die Geometrien des Fluidkanals und des Anbauteilkanals vorteilhaft so gewählt und aufeinander abgestimmt, dass bei einer Einwirkung von Temperaturen, die zu einer Erstarrung des geführten Fluides führen, die Ausbildung einer Eissäule innerhalb des Anbauteilkanals, insbesondere zumindest in einem Abschnitt des Anbauteilkanals, zeitlich vor der Ausbildung einer Eissäule innerhalb des Fluidkanals abgeschlossen ist.

Weitere vorteilhafte Ausgestaltungen der Erfindung ergeben sich aus der folgenden Figurenbeschreibung und den Unteransprüchen. Im Folgenden wird die Erfindung anhand von Ausführungsbeispielen näher erläutert. Es zeigen:
- Fig. 1: ein Ausführungsbeispiel eines Fluidleitungselements in Seitenansicht,
- Fig. 2a: das Ausführungsbeispiel gemäß Fig. 1, geschnitten entlang der Linie A-A in Fig. 1,
- Fig. 2b: einen Schnitt durch das Ausführungsbeispiel gemäß Fig. 1 ohne Anbauteil,
- Fig. 3: einen Schnitt durch ein Ausführungsbeispiel eines Fluidleitungselements,
- Fig. 4: eine Vergrößerung im Bereich B der Fig. 3,
- Fig. 5: einen Schnitt durch das Ausführungsbeispiel gemäß Fig. 3,
- Fig. 6: ein Ausführungsbeispiel eines Fluidleitungselements in Schnittansicht,
- Fig. 7: eine Vergrößerung im Bereich B der Fig. 6,
- Fig. 8: einen Schnitt durch das Ausführungsbeispiel gemäß Fig. 6 und
- Fig. 9: einen Schnitt durch das Ausführungsbeispiel gemäß Fig. 6 entlang der Linie C-C in Fig. 6.

In den verschiedenen Figuren der Zeichnung sind gleiche Teile stets mit denselben Bezugszeichen versehen.

Zu der anschließenden Beschreibung wird ausdrücklich beansprucht, dass die Erfindung nicht auf alle oder mehrere Merkmale von beschriebenen Merkmalskombinationen beschränkt ist, vielmehr kann jedes einzelne Teilmerkmal des Ausführungsbeispiels auch losgelöst von allen anderen im Zusammenhang damit beschriebenen Teilmerkmalen für sich und auch in Kombination mit anderen Merkmalen sowie auch unabhängig von den Merkmalskombinationen und Rückbeziehungen der Ansprüche eine erfinderische Bedeutung in Verbindung mit dem Gegenstand des Anspruchs 1 haben.

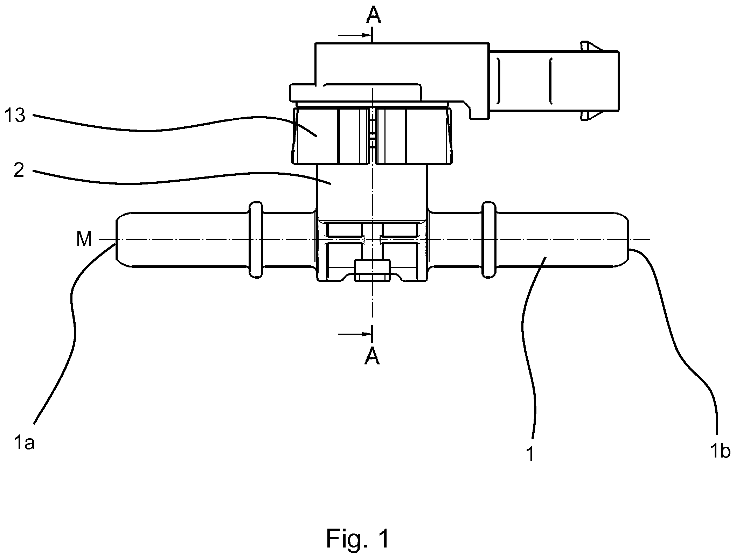

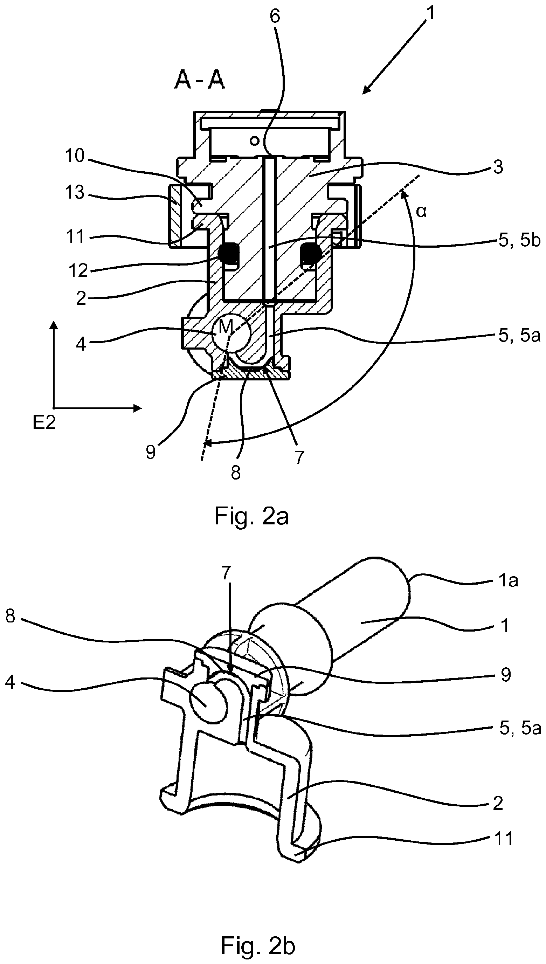

Fig. 1, Fig. 2a und Fig. 2b zeigen ein Ausführungsbeispiel eines Fluidleitungselementes 1 für eine Fluidleitung mit mindestens einer Anschlussvorrichtung 2 für ein Anbauteil 3. Das Anbauteil 3 ist bei diesem Ausführungsbeispiel als Drucksensor ausgebildet. Das Fluidleitungselement 1 weist mindestens einen Fluidkanal 4 und mindestens einen Anbauteilkanal 5 auf. Der Fluidkanal erstreckt sich zwischen einem ersten Ende 1a und einem zweiten Ende 1b des Fluidleitungselements 1. Der Anbauteilkanal 5 zweigt von dem Fluidkanal 4 ab und erstreckt sich zwischen dem Fluidkanal 4 und einem Sensorelement 6 des Anbauteils 3 - siehe Fig. 2a.

Gemäß Fig. 2a und Fig. 2b weist der Anbauteilkanal entlang seiner Erstreckung zwischen dem Fluidkanal 4 und dem Sensorelement 6, insbesondere der Membran, des Anbauteils 3 eine Umlenkung 7 auf, die bei diesem Ausführungsbeispiel als bogenförmiger Verlauf 8 mit einer Richtungsänderung von 180° ausgebildet ist. Der bogenförmige Verlauf 8 weist einen konstanten Krümmungsradius auf. Bei diesem Ausführungsbeispiel ist der Anbauteilkanal 4 zumindest im einem Bereich von einem abnehmbaren Deckel 9 verschlossen. Der Querschnitt des Anbauteilkanals 5 ist geringer als der Querschnitt des Fluidkanals 4. Insbesondere ist der Querschnitt eines ersten Abschnitts 5a des Anbauteilkanals 5 innerhalb des Fluidleitungselements 1 geringer als der Querschnitt eines zweiten Abschnitts 5b des Anbauteilkanals 5 innerhalb des Anbauteils 3.

Durch den bogenförmigen Verlauf 8 wird einerseits verhindert, dass sich eine innerhalb des Anbauteilkanals 5 ausbildende Eissäule innerhalb des Anbauteilkanals 5 verschieben lässt, andererseits wird durch die Führung des Anbauteilkanals, insbesondere des Abschnitts 5a um den Fluidkanal 4 herum, ein zeitlich aufeinanderfolgendes Einfrieren zuerst des Anbauteilkanals 5 und anschließend des Fluidkanals 4 gewährleistet. Den Fig. 2 und 2a ist ferner zu entnehmen, dass die Anschlussvorrichtung 2 außermittig angeordnet ist.

Gemäß Fig. 2a verläuft der Anbauteilkanal 5 in einer gedachten Ebene E2, zu der die Mittelachse M des Fluidkanals 4 eine Normale ist. Der Anbauteilkanal 5 erstreckt sich zumindest teilweise umgebend um den Fluidkanal 4, vorliegend mit einem Mittelpunktswinkel α von etwa 135° um die Mittelachse M. Ferner verläuft der erste Abschnitt 5a zumindest abschnittsweise parallel zu einer Tangente an den Querschnitt des Fluidkanals 4. Das als Drucksensor ausgebildete Anbauteil 3 weist bei diesem Ausführungsbeispiel einen ersten Haltekragen 10 auf, der an einem zweiten Haltekragen 11 der Anschlussvorrichtung 2 anliegt. Das Anbauteil 3 ragt zumindest teilweise in die Anschlussvorrichtung 2 hinein und ist mit einer umlaufenden O-Ring-Dichtung 12 abgedichtet. Das Anbauteil 3 und die Anschlussvorrichtung 2 sind mit einem Haltering 13 miteinander verbunden. Der Haltering ist flexibel und entfernbar ausgebildet.

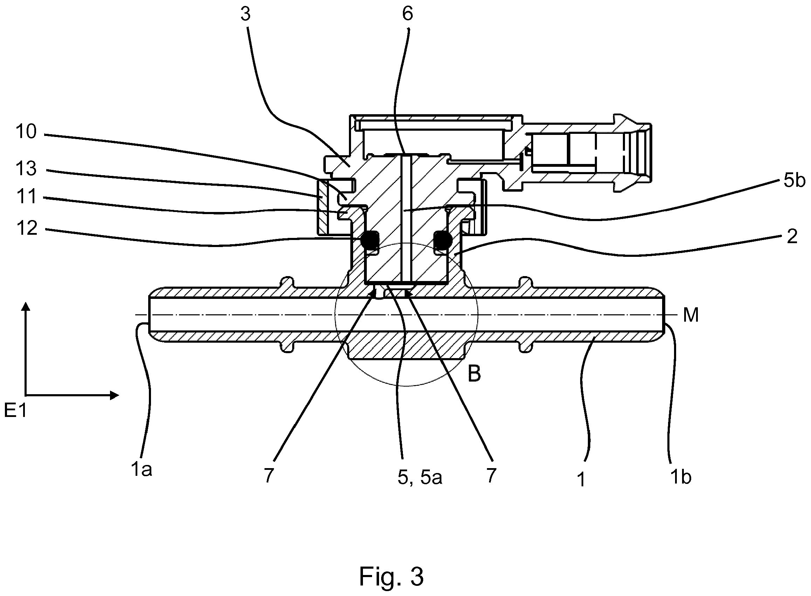

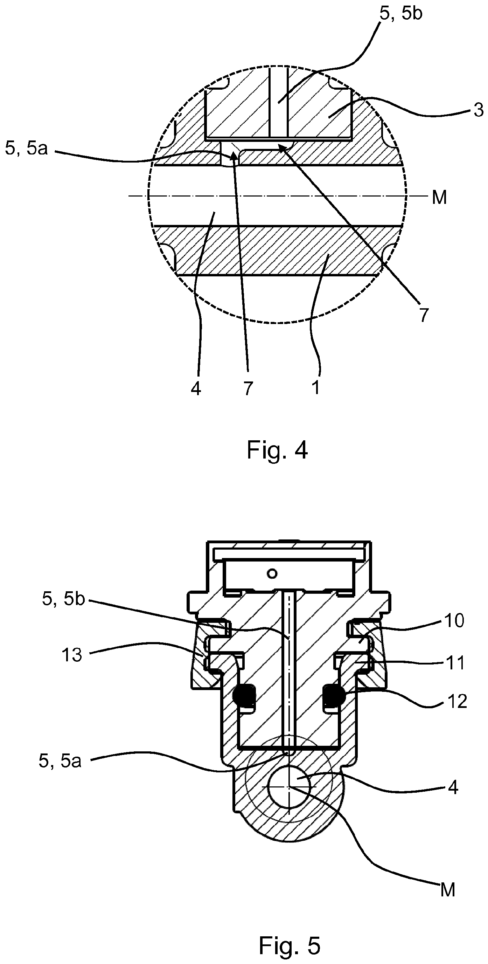

Fig. 3, Fig. 4 und Fig. 5 zeigen ein weiteres Ausführungsbeispiel eines Fluidleitungselementes 1 in verschiedenen Schnittansichten bzw. Vergrößerungen. Gemäß Fig. 3 und Fig. 4 ist die Anschlussvorrichtung 2 ein Anbauteil 3 eingebracht und mit einem Haltering 13 gesichert. Der Haltering 13 übergreift des Haltekragen 10 und den Haltekragen 11. Bei diesem Ausführungsbeispiel sind zwei Umlenkungen 7 vorgesehen. Die Umlenkungen 7 des Anbauteilkanals 5 befindet sich innerhalb des Fluidleitungselementes 1. Ausgehend von der Fluidleitung 4 vollzieht der Anbauteilkanal 5 einen Richtungswechsel von etwa 90° und geht in ein halbkreisförmiges Profil über - siehe auch Fig. 5 - . Anschließend wird ein weiterer Richtungswechsel von 90° vollzogen, so dass sich der Anbauteilkanal 5 mit seinem Abschnitt 5b weiter innerhalb des Anbauteils 3 erstreckt. Innerhalb des Anbauteils 3 ist bei diesem Ausführungsbeispiel keine Umlenkung vorgesehen.

Der Querschnitt im Abschnitt 5a innerhalb des Fluidleitungselementes 1 ist geringer als der Querschnitt in Abschnitt 5b innerhalb des Anbauteils 3. Fig. 3 und Fig. 5 ist zu entnehmen, dass sich der Anbauteilkanal 5 in einer gedachten Ebene E1 zusammen mit der Mittelachse M des Fluidkanals 4 befindet, so dass die Anschlussvorrichtung 2 zentral oberhalb des Fluidkanals 4 angeordnet ist. Fig. 4 zeigt eine Vergrößerung des Ausschnitts B gemäß Fig. 3, der zu entnehmen ist, dass die Umlenkung 7 im ausschließlich im Fluidleitungselement 1 angeordnet ist, so dass das Anbauteil 3 standardisiert ausgebildet sein kann. Ferner ist Fig. 4 zu entnehmen, dass der Querschnitt des Anbauteilkanals 5 deutlich geringer als der Querschnitt des Fluidkanals 4 ist. Im Falle einer Frosteinwirkung bildet sich folglich zunächst im Anbauteilkanal 5 eine Eissäule, die aufgrund der Umlenkungen 7 nicht verschiebbar ist, insbesondere nicht durch eine Kraftwirkung einer sich im Fluidkanal 4 ausbildenden Eissäule.

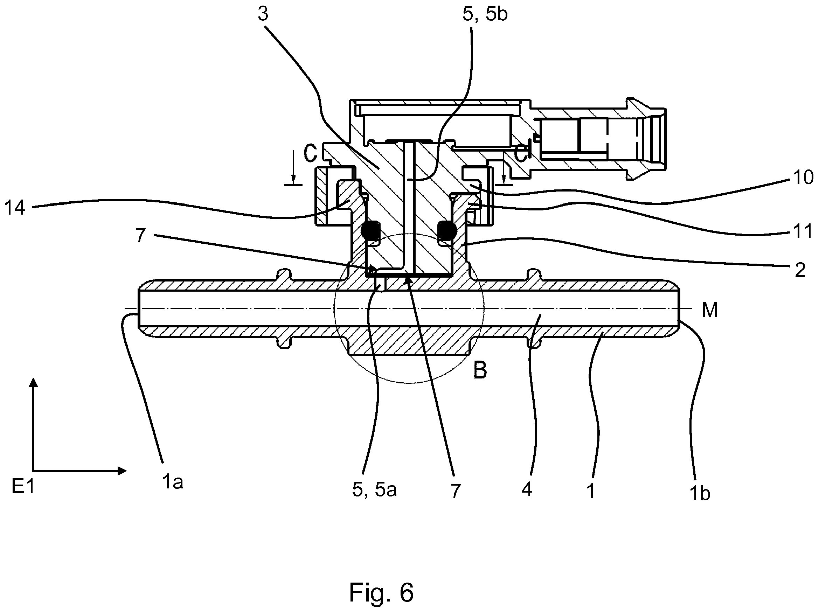

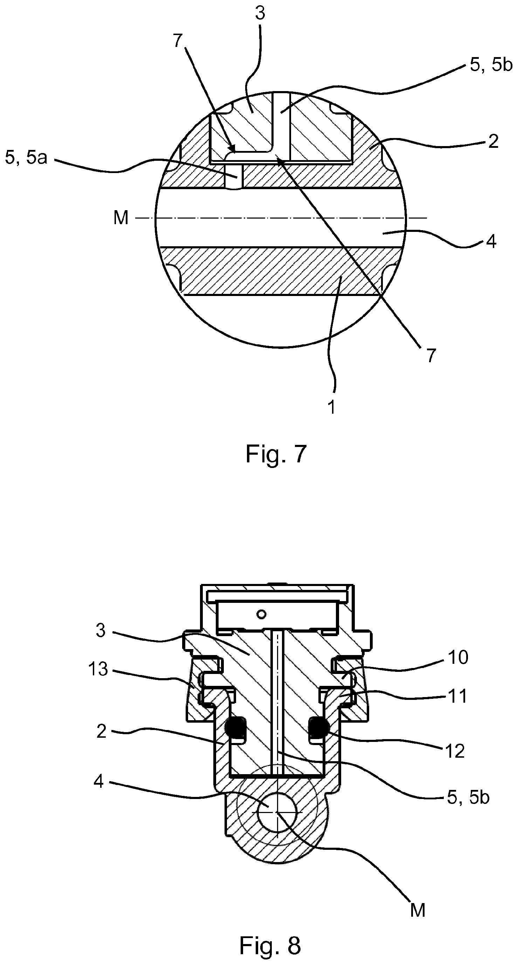

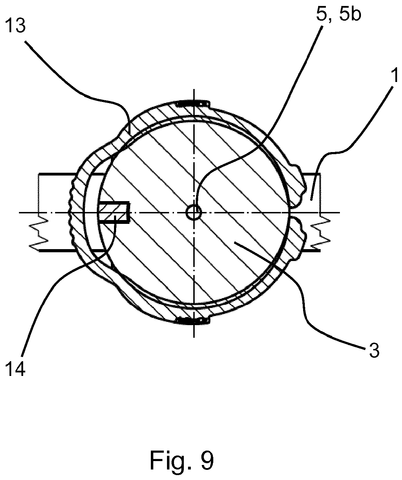

Fig. 6, Fig. 7, Fig. 8 und Fig. 9 zeigen ein weiteres Ausführungsbeispiel eines Fluidleitungselementes 1 in verschiedenen Schnittansichten. Fig. 6 zeigt, dass die Umlenkungen 7 des Anbauteilkanals 5 innerhalb des Anbauteils 3 angeordnet sind. Um zu verhindern, dass eine Verdrehung des Anbauteilkanals 5 erfolgt, ist eine in Fig. 9 dargestellte Verdrehsicherung 14 vorgesehen, die eine Rotation des Anbauteils 3 relativ zur Anschlussvorrichtung 2 verhindert, insbesondere durch einen Formschluss. Gemäß Fig. 6 und Fig. 7 ist der Abschnitt 5a des Anbauteilkanals 5 als gerade Abzweigung aus dem Fluidkanal ausgebildet. Das Anbauteil ist speziell ausgestaltet und weist eine halbschalenförmige Ausnehmung auf, die die den Anbauteilkanal 5 mit den Umlenkungen 7 ausbildet.

Fig. 6 und Fig. 8 zeigen, dass auch bei diesem Ausführungsbeispiel der Anbauteilkanal 5 in einer gedachten Ebene E1 angeordnet ist, die auch die Mittelachse M des Fluidkanals 4 beinhaltet. Gemäß Fig. 6 ist in die Anschlussvorrichtung 2 ein als Drucksensor ausgebildetes Anbauteil 3 eingebracht und mit einem Haltering 13 formschlüssig verbunden. Die Verdrehsicherung 14 ist zumindest teilweise am Haltekragen 11 ausgebildet.

### Bezugszeichenliste

- 1: Fluidleitungselement
- 1a: Erstes Ende
- 1b: Zweites Ende
- 2: Anschlussvorrichtung
- 3: Anbauteil
- 4: Fluidkanal
- 5: Anbauteilkanal
- 5a: Abschnitt des Anbauteilkanals
- 5b: Abschnitt des Anbauteilkanals
- 6: Sensorelement
- 7: Umlenkung
- 8: Verlauf
- 9: Deckel
- 10: Erster Haltekragen
- 11: Zweiter Haltekragen
- 12: Dichtung
- 13: Haltering
- 14: Verdrehsicherung

- α: Mittelpunktswinkel
- E1: Ebene
- E2: Ebene
- M: Mittelachse

## Patentansprüche

1. Fluidleitungselement (1) für eine Fluidleitung, insbesondere in einem Kraftfahrzeug, mit mindestens einer Anschlussvorrichtung (2) für ein Anbauteil (3), mit mindestens einem Fluidkanal (4), mindestens einem Anbauteilkanal (5) und mit mindestens einem Anbauteil (3), wobei
- der Anbauteilkanal (5) von dem Fluidkanal (4) abzweigt,
- der Querschnitt des Anbauteilkanals (5) geringer als der Querschnitt des Fluidkanals (4) ist,
- wobei der Querschnitt des Anbauteilkanals (5) entlang seiner Erstreckung konstant oder variierend ausgebildet ist, wobei im Falle eines variierenden Querschnitts der Querschnitt stets kleiner als der Querschnitt des Fluidkanals (4) ist,
- die Anschlussvorrichtung (2) als Aufnahme für einen Sensor ausgebildet ist,
**dadurch gekennzeichnet, dass**
- der Anbauteilkanal (5) in seinem Verlauf mindestens eine Umlenkung (7) aufweist, und dass
- der Anbauteilkanal (5) zumindest teilweise im Fluidleitungselement (1) und zumindest teilweise im Anbauteil (3) verläuft.

2. Fluidleitungselement (1) nach Anspruch 1,
**dadurch gekennzeichnet, dass**
die Umlenkung (7) eine Richtungsänderung von mindestens 75°, insbesondere mindestens 90°, bevorzugt von 180° beinhaltet.

3. Fluidleitungselement (1) nach Anspruch 1 oder 2,
**dadurch gekennzeichnet, dass**
dass der Anbauteilkanal (5) ausgehend von der Fluidleitung (4) unmittelbar einen bogenförmigen Verlauf (8), insbesondere mit einer Richtungsänderung von 180°, aufweist, bevorzugt dass der Anbauteilkanal (5) zumindest teilweise von einem abnehmbaren Deckel (9) am Fluidleitungselement (1) verschlossen wird.

4. Fluidleitungselement (1) einem der Ansprüche 1 bis 3,
**dadurch gekennzeichnet, dass**
der Querschnitt des Anbauteilkanals (5) 20 %, insbesondere 10%, bevorzugt 5%, des Querschnitts des Fluidkanals (4) entspricht.

5. Fluidleitungselement (1) nach einem der Ansprüche 1 bis 4,
**dadurch gekennzeichnet, dass**
die Umlenkung (7) im Fluidleitungselement (1) und/oder im Anbauteil (3) angeordnet ist.

6. Fluidleitungselement (1) nach einem der Ansprüche 1 bis 5,
**dadurch gekennzeichnet, dass**
der Querschnitt des Anbauteilkanals (5) im Fluidleitungselement (1) geringer ist als der Querschnitt des Anbauteilkanals (5) im Anbauteil (3).

7. Fluidleitungselement (1) nach einem der Ansprüche 1 bis 6,
**dadurch gekennzeichnet, dass**
der Anbauteilkanal (5) in einer gedachten Ebene E1 verläuft, die eine Mittelachse (M) des Fluidkanals (4) beinhaltet, oder dass der Anbauteilkanal (5) in einer Ebene E2 verläuft, zu der die Mittelachse (M) des Fluidkanals (4) eine Normale ist.

8. Fluidleitungselement (1) nach einem der Ansprüche 1 bis 7,
**dadurch gekennzeichnet, dass**
der Anbauteilkanal (5) den Fluidkanal (4) zumindest teilweise umgebend angeordnet ist, insbesondere in einem Bereich mit einem Mittelpunktswinkel (α) um die Mittelachse (M) des Fluidkanals (4) von 135°.

9. Fluidleitungselement (1) nach einem der Ansprüche 1 bis 8,
**dadurch gekennzeichnet, dass**
der Anbauteilkanal (5) zumindest abschnittsweise einen halbkreisförmigen Querschnitt aufweist.

10. Fluidleitungselement (1) nach einem der Ansprüche 1 bis 9,
**dadurch gekennzeichnet, dass**
das Anbauteil (3) mit einer Verdrehsicherung (14) gegen ein Verdrehen gegenüber der Anschlussvorrichtung (2) gesichert ist.

11. Fluidleitungselement (1) nach einem der Ansprüche 1 bis 10,
**dadurch gekennzeichnet, dass**
die Anschlussvorrichtung (2) als Aufnahme für einen Drucksensor ausgebildet ist.

12. Fluidleitungselement (1) nach einem der Ansprüche 1 bis 11,
**dadurch gekennzeichnet, dass**
das Fluidleitungselement (1) als Verbindungsstück, insbesondere als Winkelstück oder als T-Stück, zum Verbinden von Fluidleitungen ausgebildet ist.

13. Fluidleitungselement (1) nach einem der Ansprüche 1 bis 12,
**dadurch gekennzeichnet, dass**
das Anbauteil (3) als Drucksensor ausgebildet ist.

## Claims

1. Fluid line element (1) for a fluid line, in particular in a motor vehicle, comprising at least one connection device (2) for an attachment member (3), comprising at least one fluid channel (4), at least one attachment member channel (5) and comprising at least one attachment member (3), wherein
- the attachment member channel (5) branches off from the fluid channel (4),
- the cross-section of the attachment member channel (5) being smaller than the cross-section of the fluid channel (4),
- wherein the cross-section of the attachment member channel (5) is designed to be constant or varying along its extension, wherein in the case of a varying cross-section the cross-section is constantly smaller than the cross-section of the fluid channel (4),
- the connection device (2) is designed as a receptacle for a sensor,
**characterized in that**
- the attachment member channel (5) has at least one deflection (7) in its course, and **in that**
- the attachment member channel (5) runs at least partially in the fluid line element (1) and at least partially in the attachment member (3).

2. Fluid line element (1) according to claim 1,
**characterized in that**
the deflection (7) includes a change of direction of at least 75°, in particular at least 90°, preferably 180°.

3. Fluid line element (1) according to claim 1 or 2,
**characterized in that**
**in that** the attachment member channel (5), starting from the fluid line (4), has directly an arcuate course (8), in particular with a change in direction of 180°, preferably **in that** the attachment member channel (5) is at least partially closed by a removable cover (9) on the fluid line element (1).

4. Fluid line element (1) according to one of the claims 1 to 3,
**characterized in that**
the cross-section of the attachment member channel (5) corresponds to 20%, in particular 10%, preferably 5%, of the cross-section of the fluid channel (4).

5. Fluid line element (1) according to one of claims 1 to 4,
**characterized in that**
the deflection (7) is arranged in the fluid line element (1) and/or in the attachment member (3).

6. Fluid line element (1) according to one of claims 1 to 5,
**characterized in that**
the cross-section of the attachment member channel (5) in the fluid line element (1) is smaller than the cross-section of the attachment member channel (5) in the attachment member (3).

7. Fluid line element (1) according to one of claims 1 to 6,
**characterized in that**
the attachment member channel (5) runs in an imaginary plane E1 which contains a center axis (M) of the fluid channel (4), or **in that** the attachment member channel (5) runs in a plane E2 to which the center axis (M) of the fluid channel (4) is a normal.

8. Fluid line element (1) according to one of claims 1 to 7,
**characterized in that**
the attachment member channel (5) is arranged at least partially surrounding the fluid channel (4), in particular in an area with a center angle (α) about the center axis (M) of the fluid channel (4) of 135°.

9. Fluid line element (1) according to one of claims 1 to 8,
**characterized in that**
the attachment member channel (5) has a semicircular cross-section at least in sections.

10. Fluid line element (1) according to one of claims 1 to 9,
**characterized in that**
the attachment member (3) is secured against rotation relative to the connection device (2) by means of an anti-rotation device (14).

11. Fluid line element (1) according to one of claims 1 to 10,
**characterized in that**
the connection device (2) is designed as a receptacle for a pressure sensor.

12. Fluid line element (1) according to one of claims 1 to 11,
**characterized in that**
the fluid line element (1) is designed as a connecting element, in particular as an elbow or as a T-piece, for connecting fluid lines.

13. Fluid line element (1) according to one of claims 1 to 12,
**characterized in that**
the attachment member (3) is designed as a pressure sensor.

## Revendications

1. Élément (1) de conduite de fluide pour une conduite de fluide, en particulier dans un véhicule automobile, comprenant au moins un dispositif de raccordement (2) pour une pièce de montage (3), avec au moins un conduit de fluide (4), au moins un conduit (5) de pièce de montage et avec au moins une pièce de montage (3), dans lequel
- le conduit (5) de pièce de montage bifurque du conduit de fluide (4),
- la section transversale du conduit (5) de pièce de montage est inférieure à la section transversale du conduit de fluide (4),
- la section transversale du conduit (5) de pièce de montage est constante ou variable le long de son extension, la section transversale étant toujours inférieure à la section transversale du conduit de fluide (4) dans le cas d'une section transversale variable,
- le dispositif de raccordement (2) est conçu sous la forme d'un logement pour un capteur,
**caractérisé en ce que**
- le conduit (5) de pièce de montage présente sur son parcours au moins une déviation (7), et **en ce que**
- le conduit (5) de pièce de montage s'étend au moins partiellement dans l'élément (1) de conduite de fluide et au moins partiellement dans la pièce de montage (3).

2. Élément (1) de conduite de fluide selon la revendication 1,
**caractérisé en ce que**
la déviation (7) comprend un changement de direction d'au moins 75°, en particulier d'au moins 90°, de préférence de 180°.

3. Élément (1) de conduite de fluide selon la revendication 1 ou 2,
**caractérisé en ce que**
le conduit (5) de pièce de montage présente directement, à partir de la conduite de fluide (4), un tracé courbe (8), en particulier avec un changement de direction de 180°, de préférence **en ce que** le conduit (5) de pièce de montage est fermé au moins partiellement par un couvercle amovible (9) sur l'élément (1) de conduite de fluide.

4. Élément (1) de conduite de fluide selon l'une des revendications 1 à 3,
**caractérisé en ce que**
la section transversale du conduit (5) de pièce de montage correspond à 20%, notamment 10%, de préférence 5%, de la section transversale du conduit fluidique (4).

5. Élément (1) de conduite de fluide selon l'une quelconque des revendications 1 à 4,
**caractérisé en ce que**
la déviation (7) est aménagée dans l'élément (1) de conduite de fluide et/ou dans la pièce de montage (3).

6. Élément (1) de conduite de fluide selon l'une des revendications 1 à 5,
**caractérisé en ce que**
la section transversale du conduit (5) de pièce de montage dans l'élément (1) de conduite de fluide est inférieure à la section transversale du conduit (5) de pièce de montage dans la pièce de montage (3).

7. Élément (1) de conduite de fluide selon l'une des revendications 1 à 6,
**caractérisé en ce que**
le conduit (5) de pièce de montage s'étend dans un plan imaginaire E1 qui contient un axe central (M) du conduit de fluide (4), ou **en ce que** le conduit (5) de pièce de montage s'étend dans un plan E2 par rapport auquel l'axe central (M) du conduit de fluide (4) est une normale.

8. Élément (1) de conduite de fluide selon l'une des revendications 1 à 7,
**caractérisé en ce que**
le conduit (5) de pièce de montage est aménagé de façon à entourer au moins partiellement le conduit de fluide (4), notamment dans une zone présentant un angle au centre (α) autour de l'axe central (M) du conduit de fluide (4) de 135°.

9. Élément (1) de conduite de fluide selon l'une quelconque des revendications 1 à 8,
**caractérisé en ce que**
le conduit (5) de pièce de montage présente, au moins par portions, une section transversale semi-circulaire.

10. Élément (1) de conduite de fluide selon l'une des revendications 1 à 9,
**caractérisé en ce que**
la pièce de montage (3) est bloquée en rotation par rapport au dispositif de raccordement (2) au moyen d'un dispositif anti-rotation (14).

11. Élément (1) de conduite de fluide selon l'une des revendications 1 à 10,
**caractérisé en ce que**
le dispositif de raccordement (2) est conçu sous la forme d'un logement pour un capteur de pression.

12. Élément (1) de conduite de fluide selon l'une des revendications 1 à 11,
**caractérisé en ce que**
l'élément (1) de conduite de fluide est conçu sous la forme d'une pièce de raccordement, en particulier comme une pièce coudée ou une pièce en T, pour raccorder des conduites de fluide.

13. Élément (1) de conduite de fluide selon l'une des revendications 1 à 12,
**caractérisé en ce que**
la pièce de montage (3) est conçu sous la forme d'un capteur de pression.
